# EUROPEAN PATENT APPLICATION

(11) **EP 1 829 664 A1**
(43) Date of publication of application: **05.09.2007**
(21) Application number: 05819762.5
(22) Date of filing: 22.12.2005
(51) Int. Cl.: B29C 45/80, B29C 45/16, B29C 45/66, B29C 45/70

(54) **MOLDING METHOD, MOLDING MACHINE, AND MOLDED PRODUCT**

(30) Priority: 24.12.2004 JP 2004372554
(71) Applicant: SUMITOMO HEAVY INDUSTRIES, LTD., Shinagawa-ku, Tokyo 141-8686 (JP)
(72) Inventor: TAKIGAWA, Naoki, SUMITOMO HEAVY INDUSTRIES, LTD., Inage-ku, Chiba-shi, Chiba 2630001 (JP)
(74) Representative: Wagner, Karl H.
(86) International application number: PCT/JP2005/023673
(87) International publication number: WO 2006/068248

(57) **Abstract**

An object is to provide a molding method and a molding machine which can reduce load acting on a drive section for mold clamping, as well as a molded product produced by the molding method or the molding machine. The method includes the steps (the molding machine includes means) for charging a molding material into a cavity a plurality of times; performing mold clamping each time the molding material is charged; and retreating, at a predetermined timing, a base plate by a predetermined mold thickness adjustment amount so as to adjust the origin position of a toggle mechanism. In this case, a molding material is charged into the cavity a plurality of times; mold clamping is performed each time the molding material is charged; and at a predetermined timing, the base plate is retreated by a predetermined mold thickness adjustment amount whereby the origin position of the toggle mechanism is adjusted. Since the compressing force increases, the load acting on a drive section for mold clamping can be reduced.

## Description

### TECHNICAL FIELD

The present invention relates to a molding method, a molding machine, and a molded product.

### BACKGROUND ART

Conventionally, in a molding machine; for example, in an injection-molding machine, resin heated and melted in a heating cylinder is injected under high pressure and charged into a cavity of a mold apparatus, and the injected resin is cooled and solidified in the cavity. Subsequently, a molded product is removed from the mold apparatus.

The injection-molding machine includes a mold apparatus, a mold-clamping apparatus, and an injection apparatus. The mold apparatus includes a mold composed of a stationary mold and a movable mold. The mold-clamping apparatus includes a stationary platen, a movable platen, a mold-clamping motor, serving as a drive section for mold clamping, a toggle mechanism, etc. When the mold-clamping motor is driven so as to operate a ball screw, to thereby advance or retreat a crosshead, the toggle mechanism operates to advance or retreat the movable platen to thereby perform mold closing, mold clamping, or mold opening. Meanwhile, the injection apparatus includes a heating cylinder for heating and melting resin fed from a hopper, and an injection nozzle for injecting the molten resin. A screw is disposed in the heating cylinder such that the screw can rotate, advance, and retreat. When the screw is rotated upon drive of a metering motor, resin is accumulated forward of the screw. When the screw is advanced upon drive of an injection motor, the molten resin is injected from the injection nozzle.

Incidentally, there has been proposed a compression molding method in which resin is charged into a cavity previously opened by an amount corresponding to a compression allowance, and the movable platen is then advanced so as to compress the resin within the cavity (see, for example, Patent Document 1).
Patent Document 1: Japanese Patent Application Laid-Open (kokai) No. H11-115010.

### DISCLOSURE OF THE INVENTION

### PROBLEMS TO BE SOLVED BY THE INVENTION

However, in the conventional compression molding method, when the compression stroke becomes equal to 3 mm or greater, the compression force generated by means of the toggle mechanism at the time of compressing the resin decreases, and the axial force acting on the ball screw increases accordingly, whereby the load acting on the mold-clamping motor becomes excessively large.

An object of the present invention is to solve the above-mentioned problems in the conventional compression molding method and to provide a molding method and a molding machine which can reduce load acting on a drive section for mold clamping, as well as a molded product produced by the molding method or the molding machine.

### MEANS FOR SOLVING THE PROBLEMS

In order to achieve the above object, the present invention provides a molding method comprising the steps of: charging a molding material into a cavity a plurality of times; performing mold clamping each time the molding material is charged; and retreating, at a predetermined timing, a base plate by a predetermined mold thickness adjustment amount so as to adjust the origin position of a toggle mechanism.

### EFFECT OF THE INVENTION

The molding method according to the present invention comprises the steps of charging a molding material into a cavity a plurality of times; performing mold clamping each time the molding material is charged; and retreating, at a predetermined timing, a base plate by a predetermined mold thickness adjustment amount so as to adjust the origin position of a toggle mechanism.

In this case, a molding material is charged into the cavity a plurality of times; mold clamping is performed each time the molding material is charged; and at a predetermined timing, the base plate is retreated by a predetermined mold thickness adjustment amount whereby the origin position of the toggle mechanism is adjusted.

Since the compressing force increases, the load acting on a drive section for mold clamping can be reduced.

### BRIEF DESCRIPTION OF DRAWINGS

FIG. 1 is a schematic view of an injection molding machine according to a first embodiment of the present invention.
FIG. 2 is a block diagram of a molding machine controller according to the first embodiment of the present invention.
FIG. 3 is a cross sectional view showing a main portion of a mold apparatus according to the first embodiment of the present invention.
FIG. 4 is a perspective view of a molded product according to the first embodiment of the present invention.
FIG. 5 is a time chart showing operation of the injection molding machine according to the first embodiment of the present invention.
FIG. 6 is a characteristic chart of a toggle mechanism according to the first embodiment of the present invention.
FIG. 7 is a cross sectional view showing a main portion of a mold apparatus according to a second embodiment of the present invention.
FIG. 8 is a perspective view of a molded product according to the second embodiment of the present invention.
FIG. 9 is a time chart showing operation of the injection molding machine according to the second embodiment of the present invention.

### DESCRIPTION OF SYMBOLS

- 11:: stationary mold
- 12:: movable mold
- 91:: stationary platen
- 92:: toggle support
- 94:: movable platen
- 95:: toggle mechanism
- 96:: mold-clamping motor
- 122:: mold-thickness motor

### BEST MODE FOR CARRYING OUT THE INVENTION

The embodiments of the present invention will next be described in detail with reference to the drawings.

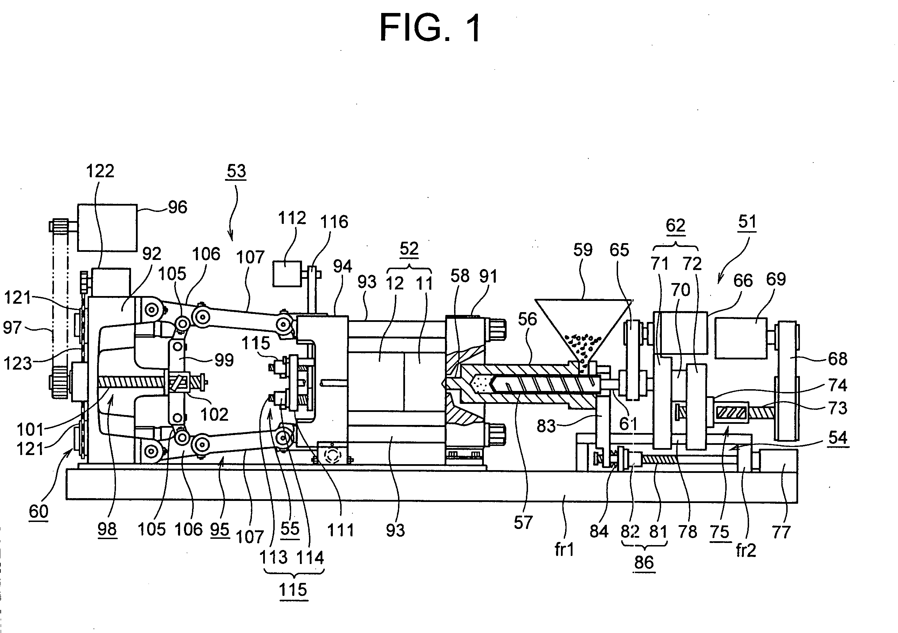

FIG. 1 is a schematic view of an injection molding machine according to a first embodiment of the present invention.

In FIG. 1, reference numeral 51 denotes an injection apparatus; 52 denotes a mold apparatus composed of a stationary mold (first mold) 11 and a movable mold (second mold) 12; 53 denotes a mold clamping apparatus disposed in opposition to the injection apparatus 51; 54 denotes a plasticization-moving apparatus which supports the injection apparatus 51 such that the injection apparatus can advance and retreat; 55 denotes an ejector apparatus; 60 denotes a mold-thickness adjustment apparatus, functioning as a toggle adjustment apparatus; and fr1 denotes a molding machine frame which supports the injection apparatus 51, the mold clamping apparatus 53, the plasticization-moving apparatus 54, etc.

The injection apparatus 51 includes a heating cylinder (cylinder member) 56; a screw (injection member) 57 disposed in the heating cylinder 56 such that the screw can rotate, advance, and retreat; an injection nozzle 58 attached to the front end of the heating cylinder 56; a hopper 59 provided on the heating cylinder 56 in the vicinity of the rear end thereof; a screw shaft 61 projecting from the rear end of the screw 57; a pressure plate 62 which includes front and rear support portions 71 and 72 connected together via a load cell (load detection section) 70, which is disposed such that the pressure plate can advance and retreat, and which rotatably supports the screw shaft 61; a metering motor (drive section for metering) 66 attached to the front support portion 71 and connected to the screw shaft 61 via a pulley-belt-type rotation transmission system (composed of a drive pulley (drive element), a driven pulley (driven element), and a timing belt (transmission member) extending between and wound around the drive pulley and the driven pulley) 65; an injection motor (drive section for injection) 69 attached to the molding machine frame fr1 and connected to a ball screw (motion-direction conversion section) 75 via a pulley-belt-type rotation transmission system (composed of a drive pulley (drive element), a driven pulley (driven element), and a timing belt (transmission member) extending between and wound around the drive pulley and the driven pulley) 68; etc. The ball screw 75 functions as a motion-direction conversion section for converting rotational motion to rectilinear motion, and includes a ball screw shaft (first conversion element) 73 connected to the rotation transmission system 68, and a ball nut (second conversion element) 74 attached to the rear support portion 72 and meshing with the ball screw shaft 73.

The plasticization-moving apparatus 54 includes a guide unit fr2; a motor (drive section for plasticizing and moving) 77 attached to the guide unit fr2; a guide 78 disposed along the longitudinal direction of the guide unit fr2 so as to guide the front support portion 71 and the rear support portion 72; a ball screw shaft (first conversion element) 81 rotatably disposed on the guide unit fr2 and rotated by means of driving the motor 77; a ball nut (second conversion element) 82 meshing with the ball screw shaft 81; a bracket 83 attached to the rear end of the heating cylinder 56; a spring (biasing member) 84 disposed between the ball nut 82 and the bracket 83; etc. Notably, the ball screw shaft 81 and the ball nut 82 constitute a ball screw 86, which functions as a motion-direction conversion section for converting rotational motion to rectilinear motion.

The mold clamping apparatus 53 includes a stationary platen (first platen) 91 attached to the molding machine frame fr1; a toggle support (base plate) 92; tie bars 93 extending between the stationary platen 91 and the toggle support 92; a movable platen (second platen) 94 disposed in opposition to the stationary platen 91 such that the movable platen can advance and retreat along the tie bars 93; a toggle mechanism 95 disposed between the movable platen 94 and the toggle support 92; a mold-clamping motor (drive section for mold clamping) 96 ; a pulley-belt-type rotation transmission system (composed of a drive pulley (drive element), a driven pulley (driven element), and a timing belt (transmission member) extending between and wound around the drive pulley and the driven pulley) 97 for transmitting to the toggle mechanism 95 rotation generated upon drive of the mold-clamping motor 96; a ball screw (motion-direction conversion section) 98 connected to the rotation transmission system 97; a crosshead 99 connected to the ball screw 98; etc. The stationary mold 11 and the movable mold 12 are attached to the stationary platen 91 and the movable platen 94, respectively, to face each other.

The ball screw 98 functions as a motion-direction conversion section for converting rotational motion to rectilinear motion, and includes a ball screw shaft (first conversion element) 101 connected to the rotation transmission system 97, and a ball nut (second conversion element) 102 attached to the crosshead 99 and meshing with the ball screw shaft 101.

The toggle mechanism 95 includes toggle levers 105 swingably supported on the crosshead 99; toggle levers 106 swingably supported on the toggle support 92; and toggle arms 107 swingably supported on the movable platen 94. The toggle levers 105 and the toggle levers 106 are mutually link-connected ; and the toggle levers 106 and the toggle arms 107 are mutually link-connected.

The toggle mechanism 95 operates as follows. When the crosshead 99 is advanced or retreated between the toggle support 92 and the movable platen 94 by means of driving the mold-clamping motor 96, the movable platen 94 advances or retreats along the tie bars 93 so as to bring the movable mold 12 into contact with the stationary mold 11 or separate the movable mold 12 from the stationary mold 11, to thereby perform mold closing, mold clamping, or mold opening.

The ejector apparatus 55 includes a crosshead 111 disposed on the rear end surface of the movable platen 94 such that the crosshead can advance and retreat in relation to the movable platen 94; an ejection motor (drive section for ejection) 112; a ball screw shaft (first conversion element) 113 rotatably disposed on the crosshead 111; a ball nut (second conversion element) 114 attached to the crosshead 111 and meshing with the ball screw shaft 113; a pulley-belt-type rotation transmission system (composed of a drive pulley (drive element), a driven pulley (driven element), and a timing belt (transmission member) extending between and wound around the drive pulley and the driven pulley) 116 for transmitting to the ball screw shaft 113 rotation generated upon drive of the ejection motor 112; an ejector rod and ejector pins, both not shown, which are advanced and retreated with advancement and retreat of the crosshead 111; etc. Notably, the ball screw shaft 113 and the ball nut 114 constitute a ball screw 115, which functions as a motion-direction conversion section for converting rotational motion to rectilinear motion.

The mold-thickness adjustment apparatus 60 includes adjustment nuts (each serving as a toggle adjustment member and a mold-thickness adjustment member) 121 meshing with screw portions formed at the rear ends of the tie bars 93; a mold-thickness motor (serving as a drive section for toggle adjustment and a drive section for mold-thickness adjustment) 122; a timing belt (transmission member) 123 for transmitting to the adjustment nuts 121 rotation generated upon drive of the mold-thickness motor 122; etc. The mold-thickness adjustment apparatus 60 advances or retreats the toggle support 92 in relation to the stationary platen 91 to thereby perform mold-thickness adjustment.

The injection apparatus 51 having the above-described structure operates as follows. When the motor 77 is driven, the rotation generated by the motor 77 is transmitted to the ball screw shaft 81, whereby the ball nut 82 is advanced or retreated. The thrust force generated by the ball nut 82 is transmitted to the bracket 83 via the spring 84, whereby the injection apparatus 51 is advanced or retreated.

In a metering step, the metering motor 66 is driven. The rotation generated by the metering motor 66 is transmitted to the screw shaft 61 via the rotation transmission system 65, whereby the screw 57 is rotated. As a result, the resin (molding material), which is supplied from the hopper 59 and which is heated and melted within the heating cylinder 56, is caused to move forward, and is accumulated forward of the screw 57. With this, the screw 57 is retreated to a predetermined position.

In an injection step, the injection nozzle 58 is pressed against the stationary mold 11, and the injection motor 69 is driven so as to rotate the ball screw shaft 73 via the rotation transmission system 68. At this time, the load cell 70 moves, as the ball screw 73 rotates, and advances the screw 57. As a result, the resin accumulated forward of the screw 57 is injected from the injection nozzle 58, and charged into a cavity formed between the stationary mold 11 and the movable mold 12. The load cell 70 receives the reaction generated at that time, and detects the pressure.

The mold clamping apparatus 53 and the ejector apparatus 55 having the above-described structures operate as follows. When the mold-clamping motor 96 is driven, the rotation generated by the mold-clamping motor 96 is transmitted to the ball screw shaft 101 via the rotation transmission system 97, whereby the ball nut 102 is advanced or retreated together with the crosshead 99. When the crosshead 99 advances, the toggle mechanism 95 is extended, whereby the movable platen 94 is advanced to perform mold closing, and the movable mold 12 comes into contact with the stationary mold 11. Subsequently, when the mold-clamping motor 96 is further driven, the toggle mechanism 95 generates a mold clamping force, with which the movable mold 12 is pressed against the stationary mold 11, whereby a cavity is formed between the stationary mold 11 and the movable mold 12. When the crosshead 99 retreats, the toggle mechanism 95 is contracted, whereby the movable platen 94 is retreated to perform mold opening.

Subsequently, the ejection motor 112 is driven. The rotation generated by means of driving the ejection motor 112 is transmitted to the ball screw shaft 113 via the rotation transmission system 116, whereby the crosshead 111 is advanced or retreated, and thus, the ejector rod is advanced or retreated. When the crosshead 111 is advanced through drive of the ejection motor 112 in the course of mold opening, the ejector pins are advanced, and a molded product is ejected.

The mold-thickness adjustment apparatus 60 having the above-described structure operates as follows. When the mold-thickness motor 122 is driven, the rotation generated by the mold-thickness motor 122 is transmitted to the adjustment nuts 121 via the timing belt 123. As a result of being rotated, the adjustment nuts 121 advance or retreat in relation to the tie bars 93 to thereby advance or retreat the toggle support 92. Consequently, the mold thickness is adjusted, and the reference position of the toggle mechanism 95 is adjusted.

Incidentally, in the present embodiment, molding is performed by a compression molding method; i.e., resin is charged into a cavity previously opened by an amount corresponding to a compression allowance, and the movable platen 94 is then advanced so as to compress the resin in the cavity.

In this case, after the resin is charged into the cavity, dwelling is performed with a large dwelling force for a long period of time. When the resin is cooled, a molded product is produced. However, since the rein is low in heat conductivity and high in degree of shrinkage as compared with metal, cooling and solidification do not proceed to a central portion of the molded product. As a result, the size of the molded product decreases. In addition, since the resin is not cooled uniformly, the molded product may have a sink mark, a cavity, deformation, warpage, or the like, and the quality of the molded product deteriorates.

In view of the above, a molded product having a layered structure composed of a plurality of layers is produced by repeating the operation of charging and compressing the resin a plurality of times.

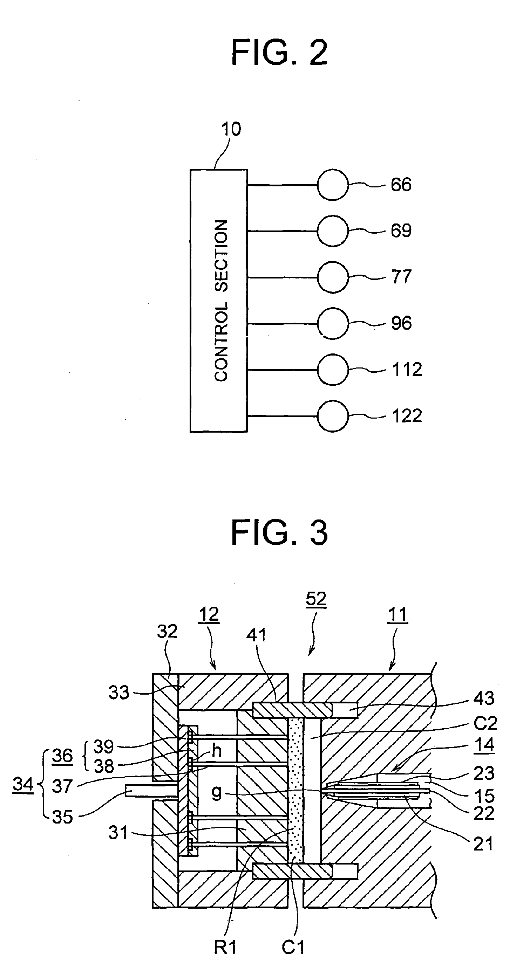

FIG. 2 is a block diagram of a molding machine controller according to the first embodiment of the present invention.

In FIG. 2, reference numeral 10 denotes a control section, which is connected to the metering motor 66, the injection motor 69, the motor 77, the mold-clamping motor 96, the ejection motor 112, and the mold-thickness motor 122. The control section 10 includes a CPU, RAM, ROM, etc., which are not shown, and functions as a computer in accordance with data, programs, etc. stored in the ROM so as to perform various kinds of calculation.

Next, a method of molding a product having a layered structure will be described.

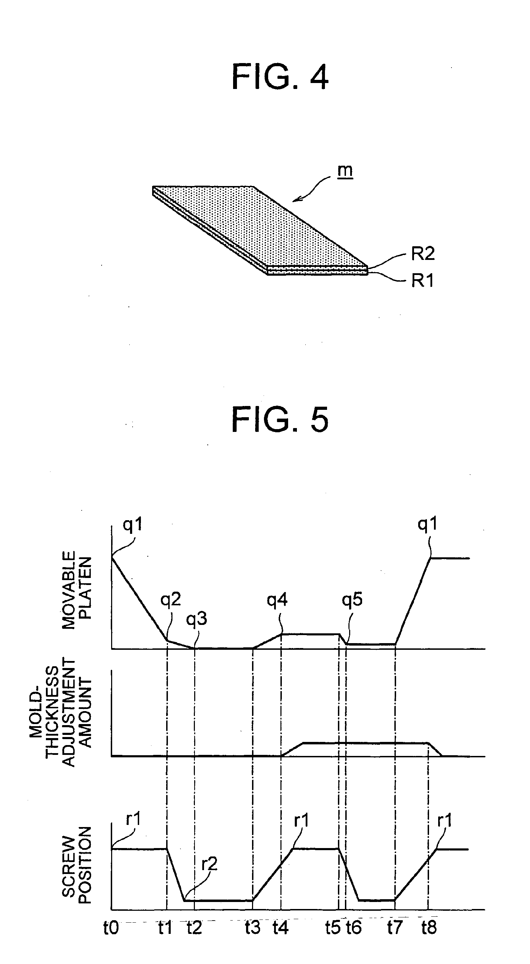

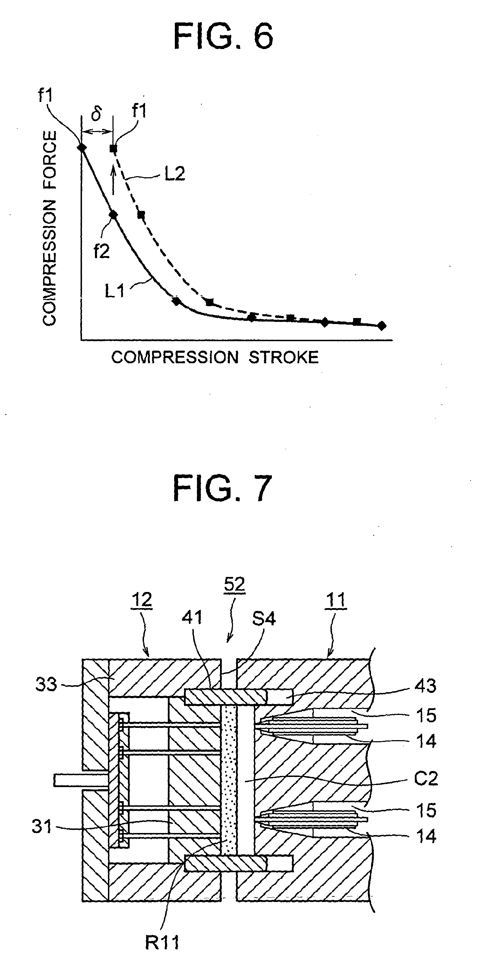

FIG. 3 is a cross sectional view showing a main portion of the mold apparatus according to the first embodiment of the present invention. FIG. 4 is a perspective view of a molded product according to the first embodiment of the present invention. FIG. 5 is a time chart showing operation of the injection molding machine according to the first embodiment of the present invention. FIG. 6 is a characteristic chart of a toggle mechanism according to the first embodiment of the present invention. In FIG. 6, the horizontal axis represents compression stroke, and the vertical axis represents compression force.

In FIG. 3, reference numeral 11 denotes a stationary mold; 12 denotes a movable mold. The stationary mold 11 and the movable mold 12 are brought into contact with each other or separated from each other so as to close, clamp, or open the mold apparatus 52. A cavity is formed between the stationary mold 11 and the movable mold 12.

A nozzle housing 15 is formed in the stationary mold 11, and a valve gate body 14 is disposed in the nozzle housing 15. The valve gate body 14 includes a nozzle 21 disposed to extend into the nozzle housing 15; a valve pin 22 disposed such that the valve pin 22 extends into the nozzle 21 and can advance and retreat; a heater (heating member) 23 disposed on the outer circumferential surface of the nozzle 21; etc. The nozzle 21 includes a conical portion disposed at the front end and a cylindrical portion adjacent to the conical portion. An unillustrated valve cylinder (drive section for gate opening and closing) is disposed rearward of the valve pin 22 so as to advance and retreat the valve pin 22. The valve cylinder is formed of a pneumatic cylinder. When driven, the valve cylinder advances or retreats the valve pin 22, to thereby open or close a valve gate g formed at the front end (left end in FIG. 3) of the nozzle 21. Accordingly, the rein injected from the injection nozzle 58 (FIG. 1) is supplied to the nozzle 21 via an unillustrated runner, and enters the cavity when the valve gate g is opened.

The movable mold 12 includes a mold plate 31 disposed to face the stationary mold 11; a receiving plate 32; a spacer block 33 disposed to form a predetermined clearance between the mold plate 31 and the receiving plate 32; and an ejector-pin feed apparatus 34 which ejects a molded product m from the cavity when the mold opening is performed. The ejector-pin feed apparatus 34, the crosshead 111, the ejection motor 112, the ball screw 115, the rotation transmission system 116, etc. constitute the ejector apparatus 55.

The ejector-pin feed apparatus 34 includes an ejector rod 35 which extends through the receiving plate 32 and which is advanced and retreated upon receipt of the rectilinear motion of the ball screw shaft 113; an ejector plate 36 disposed within the space between the mold plate 31 and the receiving plate 32 to be in contact with the front end (right end in FIG. 3) of the ejector rod 35, the ejector plate 36 being advanced when the ejector rod 35 advances (moves rightward in FIG. 3) and being retreated (moved leftward in FIG. 3) by means of an urgent force of an unillustrated return spring; ejector pins 37 which are attached to the ejector plate 36, the front ends of which face the cavity, and which are advanced or retreated upon advancement or retreat of the ejector plate 36; etc.

The ejector plate 36 is composed of two plate members 38 and 39 connected together, and a head portion h formed at the rear end (left end in FIG. 3) of each ejector pin 37 is sandwiched between the two plate members 38 and 39.

The molded product m has a layered structure; i.e., two layers Ri (i = 1, 2). Therefore, the charging is performed a plurality of times (two times in the present embodiment) as described above.

For such an operation, the control section 10 (FIG. 2) controls the injection molding machine as shown in FIG. 5. Specifically, at timing t0, mold-closing processing means (mold-closing processing section) of the control section 10 performs mold closing processing, and starts mold closing at the mold apparatus 52. That is, the mold-closing processing means drives the mold-clamping motor 96 so as to operate the toggle mechanism 95 to thereby advance the movable platen 94 from a mold opening limit position q1. As a result, a first charging space C1, which serves as a cavity, is formed between the stationary mold 11 and the movable mold 12. Meanwhile, in the injection apparatus 51, metering ends at timing t0, and the screw 57 is placed at a retreat limit position r1. Notably, in order to define and seal the outer circumferential edge of the first charging space C1, an insert block (sealing member) 41 is embedded in a front end portion (right end portion in FIG. 3) of the movable mold 12. The insert block 41 extends along the outer circumferential edge of the first charging space C1, and has a shape corresponding to the shape of the outer circumferential edge of the molded product m. Further, a groove 43 for receiving the insert block 41 is formed in the stationary mold 11 at a position corresponding to the insert block 41.

Subsequently, when the movable platen 94 reaches, at timing t1, a first charging start position q2 for starting charging of a first shot, injection processing means (injection processing section) of the control section 10 performs injection processing. That is, the injection processing means drives the injection motor 69 of the injection apparatus 51 so as to advance the screw 57, to thereby start the injection of the first shot and charge resin into the first charging space C1. Along with this operation, mold-clamping processing means (mold-clamping processing section) of the control section 10 performs mold-clamping processing. That is, the mold-clamping processing means further drives the mold-clamping motor 96 so as to further advance the movable platen 94, to thereby perform mold clamping and compress the resin in the first charging space C1.

When the screw 57 reaches an advancement limit position r2 during that period, dwelling processing means (dwelling processing section) of the control section 10 performs dwelling processing. That is, the dwelling processing means continues the drive of the injection motor 69 of the injection apparatus 51 so as to hold the pressure of the resin within the first charging space C1. While the resin charged into the first charging space C1 cools and contracts, at timing t2, the movable platen 94 reaches a first compression limit position q3 and is stopped. Even after that point in time, the mold-clamping processing means further continues the drive of the mold-clamping motor 96 so as to continuously compress the resin within the first charging space C1. During this period, the resin is cooled, and a layer R1 is formed.

Next, at timing t3, mold opening processing means (mold opening processing section) of the control section 10 performs mold opening processing. That is, the mold opening processing means starts mold opening at the mold apparatus 52, and drives the mold-clamping motor 96 in the reverse direction so as to operate the toggle mechanism 95 to thereby retreat the movable platen 94 from the mold closing limit position q3. Further, at timing t3, metering processing means (metering processing section) of the control section 10 performs metering processing so as to start metering and rotate the screw 57. As a result, by the resin accumulated forward of the screw 57, the screw 57 is retreated. When the movable platen 94 reaches, at timing t4, a second charging start position q4 for starting charging of a second shot, which is located rearward of the first charging start position q2, the mold-clamping processing means stops the drive of the mold-clamping motor 96. At that time, a second charging space C2, which serves as a cavity, is formed at the rear of the layer R1 of solidified resin by means of the stationary mold 11 and the movable mold 12.

Subsequently, at timing t5, the injection processing means drives the injection motor 69 of the injection apparatus 51 so as to advance the screw 57, to thereby start the injection of the second shot and charge the resin into the second charging space C2. Along with this operation, the mold-clamping processing means drives the mold-clamping motor 96 in the regular direction so as to advance the movable platen 94, to thereby compress the resin in the second charging space C2. Subsequently, at timing t6, the movable platen 94 reaches a second compression limit position q5, which is located rearward of the first compression limit position q3, and is stopped at the second compression limit position q5. Even after that point in time, the mold-clamping processing means further continues the drive of the mold-clamping motor 96 so as to continuously compress the resin within the second charging space C2. During this period, the resin is cooled, and a layer R2 is formed on the layer R1.

Next, at timing t7, the mold opening processing means starts mold opening at the mold apparatus 52. That is, the mold opening processing means drives the mold-clamping motor 96 in the reverse direction so as to operate the toggle mechanism 95 to thereby retreat the movable platen 94 from the second compression limit position q5 to the mold opening limit position q1. After that, an unillustrated removing machine removes the molded product m from the mold apparatus 52. Further, at timing t7, the metering processing means starts the metering and rotates the screw 57. As a result, by the resin accumulated forward of the screw 57, the screw 57 is retreated.

Incidentally, as indicated by line L1 of FIG. 6, the compression force generated by the toggle mechanism 95 changes with the compression stroke thereof. That is, when the toggle mechanism 95 is extended and the compression stroke decreases, the mold closing force; i.e., the compression force with which the molded product is compressed increases, and when the compression stroke becomes zero, the compression force reaches the maximum value f1. However, when the toggle mechanism 95 is contracted and the compression stroke increases, the compression force decreases. Therefore, in the case where the compression stroke as measured in a state where the toggle mechanism 95 is contracted and the movable platen 94 is placed at the second charging start position q4 is equal to or greater than a value σ; for example, 3 mm, only a decreased compression force of, for example, f2 is produced even when the movable platen 94 is moved from the second charging start position q4 to the second compression limit position q5 by extending the toggle mechanism 95 at the time of compressing the resin in the second shot. In this case, the axial force acting on the ball screw 98 increases accordingly, and the load acting on the mold-clamping motor 96 increases excessively.

In view of the above, in the present embodiment, mold-thickness adjustment is performed at a predetermined timing. That is, when the movable platen 94 reaches the second charging start position q4 at timing t4, in accordance with a detection value output from an unillustrated movable-platen-position detector (first position detector) which detects the position of the movable platen 94, mold-thickness adjustment processing means (mold-thickness adjustment processing section) of the control section 10 performs mold-thickness adjustment processing. That is, the mold-thickness adjustment processing means drives the mold-thickness motor 122 of the mold-thickness adjustment apparatus 60 so as to retreat the toggle support 92 by a retreat amount; i.e., a mold-thickness adjustment amount δ, which is equal to the above-mentioned value σ, in accordance with a detection value output from an unillustrated movable-thickness-adjustment-section-position detector (second position detector) which detects the position of the toggle support 92. As a result, the origin position of the toggle mechanism 95 is adjusted (shifted rearward) by the mold-thickness adjustment amount δ, so that the compression stroke and the compression force have a relation as indicated by line L2 of FIG. 6. At this time, the mold-thickness motor 122 and the mold-clamping motor 96 are driven simultaneously or alternately in an interlocked manner. Notably, when the mold-thickness motor 122 and the mold-clamping motor 96 are driven in such a manner that the movable platen 94 is maintained at the second charging start position q4, the position of the toggle support 92 can be reset most easily.

Therefore, when the movable platen 94 is moved from the second charging start position q4 to the second compression limit position q5 by extending the toggle mechanism 95, the compression force increases as indicted by an arrow, and reaches the maximum value f1. As a result, the axial force acting on the ball screw 98 decreases accordingly, and the load acting on the mold-clamping motor 96 can be reduced.

Subsequently, at a predetermined timing before the mold closing ends in the next molding cycle (in the present embodiment, at timing t8 before start of the mold closing), the mold-thickness adjustment processing means drives the mold-thickness motor 122 so as to advance the toggle support 92 by the mold-thickness adjustment amount δ to thereby return the toggle support 92 to the original position; i.e., the initial position. Notably, the mold-thickness adjustment amount δ is set to a value corresponding to the thickness of each layer Ri. That is, the mold-thickness adjustment amount δ is set to a value obtained by adding a compression allowance to the thickness of each layer Ri. Further, the mold-thickness adjustment amount δ can be set to a value corresponding to the mold-clamping force.

As described above, in the present embodiment, after the mold opening is performed at the above-mentioned timing t3, the mold-thickness adjustment processing is performed at timing t4. Therefore, no large stress is generated between each tie bar 93 and the corresponding adjustment nut 121 when the mold-thickness motor 122 is driven, and the load acting on the mold-clamping motor 96 can be reduced. Further, an insert component may be inserted between the first and second layers. In this case, the mold-thickness adjustment amount δ is set to a value obtained by adding the thickness of the insert component to a compression allowance of the second layer.

Moreover, since the operation of charging and compressing resin is repeated a plurality of times, the molded product m includes a plurality of layers Ri and has a layered structure. Therefore, generation of a sink mark, a cavity, deformation, warpage, or the like on the molded product m can be prevented, and the quality of the molded product m can be improved.

Next, there will be described a second embodiment of the present invention in which a molded product having a layered structure is produced by use of two different resins. Notably, components having the same structures as those in the first embodiment are denoted by the same reference numerals, and their repeated descriptions are omitted. For the effect that the second embodiment yields through employment of the same structure, the description of the effect of the first embodiment is incorporated herein by reference.

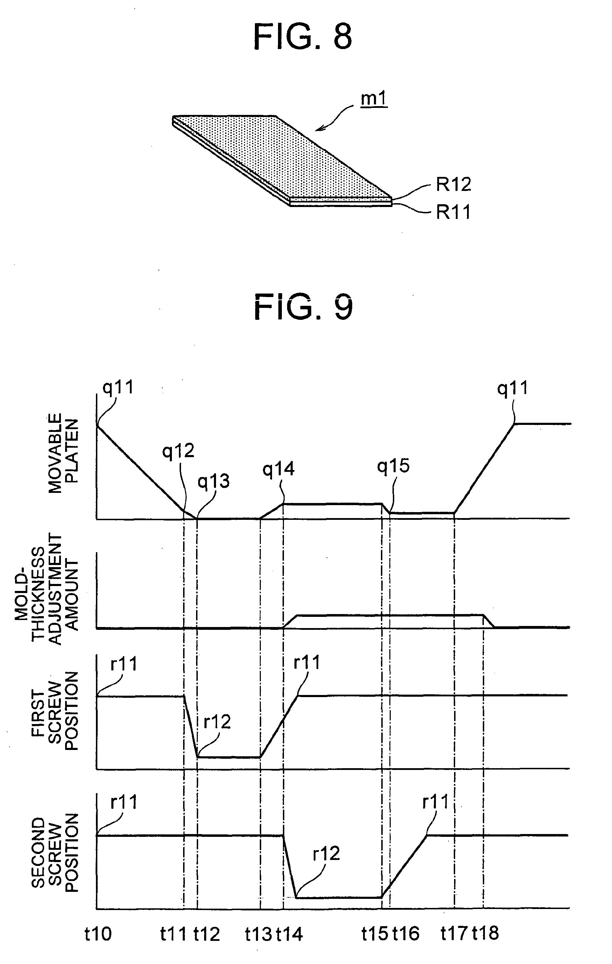

FIG. 7 is a cross sectional view showing a main portion of a mold apparatus according to the second embodiment of the present invention. FIG. 8 is a perspective view of a molded product according to the second embodiment of the present invention. FIG. 9 is a time chart showing operation of the injection molding machine according to the second embodiment of the present invention.

In this case, a plurality of injection apparatuses (in the present embodiment, first and second injection apparatuses) are provided for a single molding apparatus 52; and first and second resins (two different molding materials) are injected from the injection nozzles of the first and second injection apparatuses. Further, two nozzle housings 15 are formed in the stationary mold 11, and two valve gate bodies 14 are disposed in the respective nozzle housings 15. Notably, a recycled material can be used as the first resin, and a virgin material can be used as the second resin. Thus, a molded product m1 which has a layered structure; i.e., two layers Rj (j = 11, 12) is produced through injection of the first and second resins.

For such an operation, at timing t10, the mold-closing processing means of the control section 10 performs mold closing processing. That is, the mold-closing processing means starts mold closing at the mold apparatus 52, and drives the mold-clamping motor 96 so as to operate the toggle mechanism 95 to thereby advance the movable platen 94 from a mold opening limit position q11. As a result, a first charging space C1, which serves as a cavity, is formed between the stationary mold 11 and the movable mold 12. Meanwhile, in the first and second injection apparatuses, metering ends at timing t10, and each screw 57 is placed at a retreat limit position r11.

Subsequently, when the movable platen 94 reaches, at timing t11, a first charging start position q12, the injection processing means of the control section 10 performs injection processing. That is, the injection processing means drives the injection motor 69 of the first injection apparatus so as to advance the screw 57, to thereby start the injection of the first resin and charge the first resin into the first charging space C1. Along with this operation, the mold-clamping processing means of the control section 10 performs mold-clamping processing. That is, the mold-clamping processing means further drives the mold-clamping motor 96 so as to further advance the movable platen 94, to thereby compress the resin in the first charging space C1.

When the screw 57 of the first injection apparatus reaches an advancement limit position r12 during that period, the dwelling processing means of the control section 10 performs dwelling processing. That is, the dwelling processing means continues the drive of the injection motor 69 so as to hold the pressure of the resin within the first charging space C1. Subsequently, the movable platen 94 reaches a first compression limit position q13 at timing t12, and is stopped. Even after that point in time, the mold-clamping processing means further continues the drive of the mold-clamping motor 96 so as to continuously compress the resin within the first charging space C1. During this period, the resin is cooled, and a layer R11 is formed.

Next, at timing t13, the mold opening processing means of the control section 10 performs mold opening processing, and starts mold opening at the mold apparatus 52. That is, the mold opening processing means drives the mold-clamping motor 96 in the reverse direction so as to operate the toggle mechanism 95 to thereby retreat the movable platen 94 from the mold closing limit position q13. Further, at timing t13, the metering processing means of the control section 10 performs metering processing. That is, the metering processing means starts metering at the first injection apparatus, and rotates the screw 57. As a result, by the resin accumulated forward of the screw 57, the screw 57 is retreated. When the movable platen 94 reaches, at timing t14, a second charging start position q14, which is located rearward of the first charging start position q12, the mold-clamping processing means stops the drive of the mold-clamping motor 96. At that time, a second charging space C2 is formed at the rear of the layer R11 of solidified resin by means of the stationary mold 11 and the movable mold 12. Further, at timing t14, the injection processing means drives the injection motor 69 of the second injection apparatus so as to advance the screw 57, to thereby start the injection of the second resin and charge the second resin into the second charging space C2. When the screw 57 of the second injection apparatus reaches an advance limit position r12, the dwelling processing means of the control section 10 performs dwelling processing. That is, the dwelling processing means continues the drive of the injection motor 69 so as to hold the pressure of the resin within the second charging space C2.

Subsequently, at timing t15, the mold-clamping processing means drives the mold-clamping motor 96 in the regular direction so as to advance the movable platen 94, to thereby compress the resin in the second charging space C2. Further, at timing t15, the metering processing means starts metering, and rotates the screw 57 of the second injection apparatus. As a result, by the resin accumulated forward of the screw 57, the screw 57 is retreated. Subsequently, at timing t16, the movable platen 94 reaches a second compression limit position q15, which is located rearward of the first compression limit position q13, and is stopped at the second compression limit position q15. Even after that point in time, the mold-clamping processing means further continues the drive of the mold-clamping motor 96 so as to continuously compress the resin within the second charging space C2. During this period, the resin is cooled, and a layer R12 is formed on the layer R11.

Next, at timing t17, the mold opening processing means starts mold opening at the mold apparatus 52. That is, the mold opening processing means drives the mold-clamping motor 96 in the reverse direction so as to operate the toggle mechanism 95 to thereby retreat the movable platen 94 from the second compression limit position q15 to the mold opening limit position q11. After that, the unillustrated removing machine removes the molded product m1 from the mold apparatus 52.

Subsequently, at a predetermined timing before the mold closing ends in the next molding cycle (in the present embodiment, at timing t18 before start of the mold closing), the mold-thickness adjustment processing means drives the mold-thickness motor 122 so as to advance the toggle support 92 by the mold-thickness adjustment amount δ to thereby return the toggle support 92 to the initial position.

Incidentally, as in the first embodiment, in the case where the compression stroke as measured in a state where the toggle mechanism 95 is contracted and the movable platen 94 is placed at the second charging start position q14 is equal to or greater than 3 mm, only a decreased compression force is produced even when the movable platen 94 is moved from the second charging start position q14 to the second compression limit position q15 by extending the toggle mechanism 95 at the time of compressing the second resin. In this case, the axial force acting on the ball screw 98 increases accordingly, and the load acting on the mold-clamping motor 96 increases excessively.

In view of the above, when the movable platen 94 reaches the second charging start position q14 at timing t14, the mold-thickness adjustment processing means of the control section 10 performs mold-thickness adjustment processing. That is, the mold-thickness adjustment processing means drives the mold-thickness motor 122 of the mold-thickness adjustment apparatus 60 so as to retreat the toggle support 92 by a mold-thickness adjustment amount δ. As a result, the origin position of the toggle mechanism 95 is shifted rearward by the mold-thickness adjustment amount δ. At this time, the mold-thickness motor 122 and the mold-clamping motor 96 are driven simultaneously or alternately in an interlocked manner. Notably, when the mold-thickness motor 122 and the mold-clamping motor 96 are driven in such a manner that the movable platen 94 is maintained at the second charging start position q14, the position of the toggle support 92 can be reset most easily.

Therefore, when the movable platen 94 is moved from the second charging start position q14 to the second compression limit position q15 by extending the toggle mechanism 95, the compression force increases. As a result, the axial force acting on the ball screw 98 decreases accordingly, and the load acting on the mold-clamping motor 96 can be reduced.

Moreover, since the operation of charging and compressing resin is repeated a plurality of times, the molded product m1 includes a plurality of layers Rj and has a layered structure. Therefore, even when the ratio of the different resin exceeds 30%, the outside surface formed by the layer R12 is prevented from breaking. Accordingly, the appearance of the molded product m1 is improved.

The present invention is not limited to the above-described embodiments. Numerous modifications and variations of the present invention are possible in light of the spirit of the present invention, and they are not excluded from the scope of the present invention.

### INDUSTRIAL APPLICABILITY

The present invention is applicable to injection-molding machines.

## Claims

1. A molding method **characterized by** comprising the steps of:
(a) charging a molding material into a cavity a plurality of times;
(b) performing mold clamping each time the molding material is charged; and
(c) retreating, at a predetermined timing, a base plate by a predetermined mold thickness adjustment amount so as to adjust the origin position of a toggle mechanism.

2. A molding method according to claim 1, wherein when a product having a layered structure composed of a plurality layers is molded, the mold thickness adjustment amount is set to a value corresponding to the thickness of each layer.

3. A molding method according to claim 2, wherein the mold thickness adjustment amount is set to a value obtained by adding a compression allowance to the thickness of each layer.

4. A molding method according to claim 1, wherein the mold thickness adjustment amount is set to a value corresponding to a mold clamping force.

5. A molding method according to claim 1, wherein the base plate is returned to an initial position, at the latest, before mold closing in the next molding cycle ends.

6. A molding machine **characterized by** comprising:
(a) a stationary platen;
(b) a stationary mold attached to the stationary platen;
(c) a base plate;
(d) a movable platen disposed to be advanceable and retreatable between the stationary platen and the base plate;
(e) a movable mold attached to the movable platen;
(f) a toggle mechanism disposed between the base plate and the movable platen;
(g) a mold clamping drive section which operates the toggle mechanism so as to perform mold closing, mold clamping, and mold opening;
(h) a mold-thickness adjustment drive section which advances and retreats the base plate in relation to the stationary platen so as to perform mold-thickness adjustment;
(i) an injection processing section which charges a molding material into a cavity a plurality of times;
(j) a mold-clamping processing section which performs mold clamping each time the molding material is charged; and
(k) a mold-thickness adjustment processing section which retreats, at a predetermined timing, the base plate by a predetermined mold thickness adjustment amount so as to adjust the origin position of the toggle mechanism.

7. A molded product **characterized in that**
(a) the product is formed of a molding material charged into a cavity a plurality of times;
(b) the product is molded in such a manner that mold clamping is performed each time the molding material is charged; and
(c) a base plate is retreated, at a predetermined timing, by a predetermined mold thickness adjustment amount so as to adjust the origin position of a toggle mechanism.
